# EUROPÄISCHE PATENTSCHRIFT

(11) **EP 2 910 105 B1**
(45) Veröffentlichungstag und Bekanntmachung des Hinweises auf die Patenterteilung: **21.09.2016**
(21) Anmeldenummer: 15154945.8
(22) Anmeldetag: 13.02.2015
(51) Int. Cl.: A01D 90/04, A01F 15/10

(54) **Schneidmesser-Überlastsicherung**
Cutting blade overload safety device
Protection contre les surcharges de lame de coupe

(30) Priorität: 25.02.2014 DE 102014102393
(43) Veröffentlichungstag der Anmeldung: 26.08.2015
(73) Patentinhaber: CLAAS Saulgau GmbH, 88348 Bad Saulgau (DE)
(72) Erfinder: Birkhofer, Stefan, 78333 Stockach (DE)

(56) Entgegenhaltungen:
- EP-A2- 1 584 226
- DE-A1- 3 644 884
- DE-A1- 4 302 199
- DE-A1- 19 717 542
- DE-C2- 19 832 463

## Beschreibung

Die Erfindung betrifft eine gemäß dem Oberbegriff des Anspruchs 1 ausgebildete Schneidmesser-Überlastsicherung für ein Schneidwerk einer Erntemaschine, wie insbesondere eines Ladewagens oder einer Ballenpresse.

Ein Schneidwerk mit einer Schneidmesser-Überlastsicherung der eingangsgenannten Art ist z.B. aus DE 198 32 463 C2 bekannt. Bei diesem Schneidwerk sind eine Mehrzahl von Schneidmessern in Längsrichtung einer drehbar gelagerten Fördertrommel mit jeweiligem Abstand voneinander nebeneinanderliegend angeordnet und jeweils so um eine parallel zur Drehachse der Fördertrommel verlaufende Schwenkachse verschwenkbar gelagert, dass jedes Schneidmesser aus einer Schneidposition, in der es in einen an der Fördertrommel gebildeten Förderkanal für Erntegut hineingestellt ist, um unter Zusammenwirkung mit der Fördertrommel das Erntegut zu zerschneiden, bei Überlast wie im Kollisionsfall mit einem Fremdkörper im Förderkanal gegen eine vorbestimmte Vorspannkraft in Richtung weg von der Fördertrommel schwenkend ausweichen kann.

Jedes der Schneidmesser weist für seine Überlastsicherung ein Stütz- und Schaltglied auf, welches in einer Schaltstellung über einen daran vorgesehenen Hebel eine nachgiebige Abstützung des jeweiligen Schneidmessers in der Schneidposition erlaubt. Die Stütz- und Schaltglieder sind auf einer gemeinsamen Schaltwelle drehbar gelagert und jeweils mittels einer Verdrehfeder in eine Stützstellung zum in der Schneidposition Abstützen des jeweiligen Schneidmessers vorgespannt. Dabei liegt der Hebel des jeweiligen Stütz- und Schaltgliedes an einer Rückseite des zugeordneten Schneidmessers an und stützt dieses somit in dessen Schneidposition nachgiebig ab.

Durch die Anordnungsbeziehung von Stütz- und Schaltglied und zugeordnetem Schneidmesser ist in der Schneidposition des jeweiligen Schneidmessers nur ein kleiner Hebelarm zum Verdrehen der Verdrehfeder wirksam, was eine große Vorspannkraft bewirkt. Beim nachgebenden aus der Schneidposition heraus Verschwenken des jeweiligen Schneidmessers vergrößert sich dieser Hebelarm jedoch zunehmend, was eine allmähliche Reduzierung der Vorspannkraft bewirkt.

Die sich nur allmählich reduzierende Vorspannkraft kann sich jedoch bei einer auftretenden Überlast negativ auf die Nachgiebigkeit des betreffenden Schneidmessers auswirken und dadurch trotz Schneidmesser-Überlastsicherung ggf. eine Beschädigung des Schneidmessers zulassen.

Der Erfindung liegt daher die Aufgabe zugrunde, eine gemäß dem Oberbegriff des Anspruchs 1 ausgebildete Schneidmesser-Überlastsicherung bereitzustellen, welche bei Überlast einen verbesserten Schutz gegen Beschädigung für ein damit versehenes Schneidmesser eines Schneidwerks einer Erntemaschine, wie insbesondere eines Ladewagens oder einer Ballenpresse, bereitstellt.

Dies wird mit einer Schneidmesser-Überlastsicherung gemäß Anspruch 1 erreicht. Weiterbildungen der Erfindung sind in den abhängigen Ansprüchen definiert.

Gemäß der Erfindung weist eine Schneidmesser-Überlastsicherung für ein Schneidwerk einer Erntemaschine, wie insbesondere eines Ladewagens oder einer Ballenpresse, eine Hebelanordnung auf zum Zusammenwirken mit einem Schneidmesser des Schneidwerks, wobei die Hebelanordnung in eine Stützstellung, um das Schneidmesser in einer Schneidposition dessen abzustützen, und gegen eine vorbestimmte Vorspannkraft aus der Stützstellung heraus stellbar ist, um das Schneidmesser bei einer auf dieses einwirkenden die Vorspannkraft überschreitenden Überlast aus der Schneidposition ausweichen zu lassen.

Die erfindungsgemäße Schneidmesser-Überlastsicherung zeichnet sich dadurch aus, dass die Hebelanordnung als Kniehebelmechanismus mit zwei Kniehebeln ausgebildet ist, die über ein Knickgelenk an jeweiligen Längsenden dieser schwenkbar miteinander verbunden sind, wobei das Knickgelenk in einer Gestrecktstellung der Kniehebel unter die Vorspannkraft realisierender Vorspannung auf Anschlag stellbar ist, so dass die Stützstellung hergestellt ist, und die Kniehebel durch gegen die Vorspannung vom Anschlag weg im Knickgelenk Einknicken des Kniehebelmechanismus aus der Gestrecktstellung herausstellbar sind, um das aus der Schneidposition Ausweichen des Schneidmessers zuzulassen.

Durch diese Ausgestaltung der Schneidmesser-Überlastsicherung mit dem Kniehebelmechanismus kann zur Schneidposition des Schneidmessers hin eine relativ große Vorspannkraft bereitgestellt werden, bei deren Überschreitung das Schneidmesser schlagartig aus der Schneidposition ausweicht. Durch Ermöglichen dieses schlagartigen Ausweichens stellt die Schneidmesser-Überlastsicherung bei Überlast einen verbesserten Schutz für das Schneidmesser gegen Beschädigung bereit.

Gemäß einer Ausführungsform der Erfindung weist die Schneidmesser-Überlastsicherung einen vom Schneidmesser separaten Messerhalter auf, der eingerichtet ist, das Schneidmesser an einem Längsende dessen zu halten, und der eingerichtet ist, um eine Schwenkachse schwenkbar im Schneidwerk gelagert zu werden, so dass das Schneidmesser um die Schwenkachse in seine Schneidposition und zum aus der Schneidposition Ausweichen aus dieser heraus schwenkbar ist.

Dadurch, dass gemäß dieser Ausgestaltung der Erfindung die Anbindung der Überlastsicherung an das Schneidmesser vom Schneidmesser weg auf den separaten Messerhalter übertragen ist, also keine für die Anbindung der Überlastsicherung erforderlichen Strukturen direkt am Schneidmesser vorgesehen sein müssen, kann die erfindungsgemäße Schneidmesser-Überlastsicherung vorteilhaft für symmetrische Wendeschneidmesser mit zwei Schneiden eingesetzt werden.

Bevorzugt bildet dabei das Knickgelenk eine erste Kniehebelachse des Kniehebelmechanismus, wobei ein dem Knickgelenk abgewandtes Längsende des einen Kniehebels eingerichtet ist, um eine zur ersten Kniehebelachse parallele zweite Kniehebelachse schwenkbar im Schneidwerk gelagert zu werden, und ein dem Knickgelenk abgewandtes Längsende des anderen Kniehebels um eine zur ersten Kniehebelachse parallele dritte Kniehebelachse schwenkbar mit dem Messerhalter verbunden ist, so dass eine Schwenkbewegung des Messerhalters auf den Kniehebelmechanismus übertragbar ist und damit die indirekte Anbindung der Überlastsicherung an das Schneidmesser gewährleistet ist.

Gemäß einer weiteren Ausführungsform der Erfindung ist an den Messerhalter ein Hebel derart angeformt, dass der Hebel bei am Messerhalter gehaltertem Schneidmesser sich in einem spitzen Winkel von z.B. 30-60 Grad zu einer Längsachse des Schneidmessers erstreckend seitlich über das Schneidmesser hinaus vorsteht, wobei das dem Knickgelenk abgewandte Längsende des anderen Kniehebels mit einem distalen Ende des Hebels des Messerhalters um die dritte Kniehebelachse schwenkbar verbunden ist.

Durch diese mit dem Hebel realisierte Verlagerung des Anbindungspunktes des Kniehebelmechanismus am Messerhalter nach seitlich außen wird einerseits die Anbindung erleichtert und wird andererseits die Montage/Demontage des Schneidmessers am Messerhalter vereinfacht.

Gemäß noch einer Ausführungsform der Erfindung ist ein Messeraufnahmeabschnitt des Messerhalters sich zu einem Einsetzende dessen hin keilförmig erweiternd ausgebildet, so dass das Schneidmesser zur Halterung dessen vom Einsetzende aus formschlüssig in den Messeraufnahmeabschnitt einsetzbar ist. Bevorzugt erweitert sich der Messeraufnahmeabschnitt mit einem Keilwinkel von kleiner als 10 Grad keilförmig. Durch diese leichte Keilform von z.B. etwa 6 Grad Keilwinkel sind eine gute Passung zwischen Schneidmesser und Messerhalter sowie bei Demontage des Schneidmessers ein leichtes Entnehmen dessen gewährleistet.

Gemäß noch einer Ausführungsform der Erfindung weist die Schneidmesser-Überlastsicherung Federmittel auf, welche den Kniehebelmechanismus mittels Federwirkung unter die Vorspannkraft realisierender Vorspannung zum Anschlag hin in die Stützstellung vorspannen.

Gemäß dieser Ausführungsform der Erfindung wird die Vorspannkraft durch das Zusammenwirken der Federwirkung der Federmittel mit einer Hebelwirkung des Kniehebelmechanismus erzeugt. Da hier zwei Komponenten die wirkende Vorspannkraft realisieren, kann die Vorspannkraft noch besser variiert und somit noch besser an die Einsatzbedingungen angepasst werden. Bevorzugt sind die Federmittel so vorgesehen, dass sie ihre Federwirkung an dem Knickgelenk in den Kniehebelmechanismus einleiten. Gemäß der Erfindung können die Federmittel eine oder mehrere mechanische Federn aus Metall oder aus einem gummielastischen Material oder auch eine oder mehrere pneumatische Federn aufweisen. Gemäß der Erfindung können die Federn als Druckfedern oder wie bevorzugt als Zugfedern ausgebildet sein. Ebenso können auch Hydraulikzylinder und/oder Pneumatikzylinder als Federmittel vorgesehen werden.

Gemäß einer weiteren Ausführungsform der Erfindung weist die Schneidmesser-Überlastsicherung Krafteinstellmittel auf, die so eingerichtet sind, dass eine Größe der Vorspannkraft, mit welcher das Schneidmesser in die Schneidposition vorgespannt ist, selektiv, d.h. in einem vorbestimmten Einstellbereich und insbesondere unabhängig von einer Auslenkung der Schneidmesser und irgend einer sonstigen Bedingung frei wählbar, einstellbar ist.

Dadurch, dass gemäß dieser Ausgestaltung der Erfindung die Größe der Vorspannkraft selektiv einstellbar ist, kann eine Ausrückschwelle für jedes Schneidmesser an die jeweils vorliegenden Einsatzbedingungen wie z.B. Fremdkörperanzahl, Erntegutdurchsatz, Erntegutart und Messerzustand angepasst werden und kann somit die Schneidmesser-Überlastsicherung optimal eingestellt werden.

Die Erfindung erstreckt sich ausdrücklich auch auf solche Ausführungsformen, welche nicht durch Merkmalskombinationen aus expliziten Rückbezügen der Ansprüche gegeben sind, womit die offenbarten Merkmale der Erfindung - soweit dies technisch sinnvoll ist - beliebig miteinander kombiniert sein können.

Im Folgenden wird die Erfindung anhand einer bevorzugten Ausführungsform und unter Bezugnahme auf die beigefügten Figuren detaillierter beschrieben.
- Fig.1: zeigt eine seitliche Schnittansicht eines mit einer Schneidmesser-Überlastsicherung gemäß einer Ausführungsform der Erfindung ausgerüsteten Schneidwerks einer Erntemaschine in einem ersten Betriebszustand.
- Fig.2: zeigt eine vergrößerte Ansicht von Komponenten des Schneidwerks von Fig. 1.
- Fig.3: zeigt eine seitliche Schnittansicht des Schneidwerks von Fig. 1 in einem zweiten Betriebszustand.

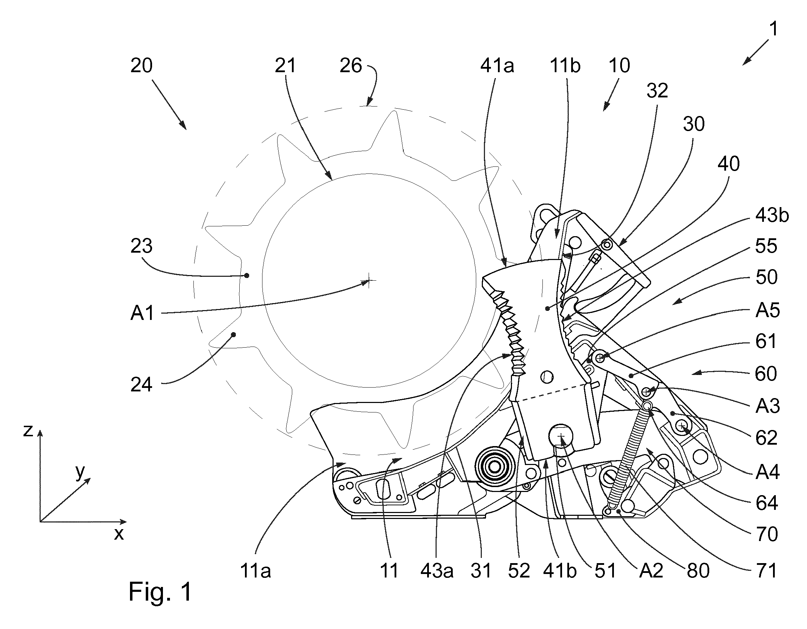

Die Figuren 1 bis 3 zeigen ein Schneidwerk 10 einer Erntemaschine 1 (nicht vollständig dargestellt), welches mit einer Schneidmesser-Überlastsicherung 50 gemäß einer Ausführungsform der Erfindung für jedes von einer Mehrzahl von Schneidmessern 40 des Schneidwerks 10 ausgerüstet ist.

Die Erntemaschine 1 ist bevorzugt als Ladewagen oder Ballenpresse ausgebildet, wobei dem Schneidwerk 10 eine Pickupeinrichtung (nicht dargestellt) mit z.B. einer Stachelwalze zur Aufnahme von nicht dargestelltem Erntegut (wie z.B. Gras oder anderes Halm- und/oder Blattgut) von einem landwirtschaftlichen Feld vorgelagert ist.

Das von der Pickupeinrichtung bzw. Aufnahmeeinrichtung aufgenommene Erntegut wird dann von dieser rotatorisch zu einem Eingang 11 a eines Förderkanals 11 des Schneidwerks 10 gefördert und dort von einer Fördertrommel 20 des Schneidwerks 10 übernommen und entlang des Förderkanals 11 zum Zerschneiden weitergefördert. Nach dem Zerschneiden des Ernteguts wird dieses an einem Ausgang 11 b aus dem Förderkanal 11 ausgegeben und dort z.B. von einer Presseinrichtung oder einer weiteren Fördereinrichtung (beide Letzteren nicht dargestellt) übernommen.

Im Detail weist das Schneidwerk 10 die Fördertrommel 20, ein Gehäuse 30, die mehreren Schneidmesser 40 und für jedes Schneidmesser 40 eine Schneidmesser-Überlastsicherung 50 auf. Die Fördertrommel 20 ist um eine in einer Längsrichtung dieser (y-Achsenrichtung in Fig. 1) verlaufende Drehachse A1 drehbar am Gehäuse 30 gelagert und weist um einen Außenumfang 21 der Fördertrommel 20 und in deren Längsrichtung verteilt eine Mehrzahl von nach radial außen vorstehenden Förderelementen in Form von Mitnehmerzinken 24 auf, welche zusammen einen Hüllzylinder 26 der Fördertrommel 20 definieren.

Obwohl aus den Figuren 1 bis 3 nicht im Detail ersichtlich, sind genauer beschrieben jeweils zwei metallische sternförmige Mitnehmerscheiben 23, die jeweils eine gleiche Anzahl (z.B. neun) Mitnehmerzinken 24 gleichmäßig umfänglich verteilt aufweisen, umfänglich geringfügig zueinander versetzt zu einem Mitnehmerscheibenpaar zusammengefügt. Auf dem Außenumfang 21 der Fördertrommel 20 sind wiederum entlang einer gesamten Arbeitslänge (in y-Achsenrichtung) der Fördertrommel 20 eine Mehrzahl solcher Mitnehmerscheibenpaare mit gleichmäßigem Abstand in Längsrichtung der Fördertrommel 20 voneinander und umfänglich so zueinander versetzt angeordnet, dass ihre Mitnehmerzinken 24 eine Schraubenkontur bzw. Wendelkontur auf der Fördertrommel 20 bilden.

Ein Leitelement 31 des Gehäuses 30 ist als ein Bodenblech des Schneidwerks 10 ausgebildet und schirmt eine im Gehäuse 30 aufgenommene Schneidwerksmechanik (nicht separat bezeichnet), welche die Schneidmesser-Überlastsicherungen 50 beinhaltet, gegen den Förderkanal 11 ab. Das Leitelement 31 erstreckt sich dabei so in Längsrichtung der Fördertrommel 20 über eine gesamte Länge des Hüllzylinders 26 und bogenförmig um einen Sektor eines Außenumfangs des Hüllzylinders 26, dass zwischen dem Außenumfang 21 der Fördertrommel 20 und dem Leitelement 31 der Förderkanal 11 für das Erntegut gebildet ist.

Die Schneidmesser 40 sind in Längsrichtung (y-Achsenrichtung in Fig. 1) der Fördertrommel 20 mit jeweiligem Abstand voneinander nebeneinanderliegend in einer Reihe angeordnet, so dass sie die gesamte Arbeitslänge der Fördertrommel 20 abdecken bzw. nutzen.

Die Schneidmesser 40 weisen jeweils ein erstes Längsende 41 a und ein zweites Längsende 41 b sowie an ihren entgegengesetzten Längsseiten jeweilige Schneiden 43a bzw. 43b auf, die spiegelsymmetrisch ausgebildet entlang ihrer Längenabmessung konkav gekrümmt sind. Mit anderen Worten sind die Schneidmesser 40 jeweils als Wendeschneidmesser ausgebildet.

Jedes Schneidmesser 40 erstreckt sich in einer Schneidposition dessen (siehe Fig. 1, in welcher sich alle Schneidmesser in der Schneidposition befinden) ausgehend von seinem zweiten Längsende 41 b, das sich auf einer der Fördertrommel 20 abgewandten Seite des Leitelements 31 befindet, längsseits durch eine schlitzförmige Öffnung 32 im Leitelement 31 hindurch in den Förderkanal 11 hinein und greift dabei in den Abstand zwischen zwei benachbarten Mitnehmerscheibenpaaren ein, um unter Zusammenwirkung mit deren Mitnehmerzinken (Förderelementen) 24 das durch den Förderkanal 11 hindurchgeförderte Erntegut zu zerschneiden. Das erste Längsende 41 a des Schneidmessers 40 ragt dabei in den Förderkanal 11 hinein.

Die auf der der Fördertrommel 20 abgewandten Seite des Leitelements 31 angeordneten Schneidmesser-Überlastsicherungen 50 für die Schneidmesser 40 teilen sich eine gemeinsame Welle 51, welche sich in Längsrichtung (y-Achsenrichtung in Fig. 1) der Fördertrommel 20 erstreckend auf definierte Positionen drehbar am Gehäuse 30 gelagert ist. Jede Schneidmesser-Überlastsicherung 50 weist außerdem einen Messerhalter 52 und eine Hebelanordnung in Form eines Kniehebelmechanismus 60 auf.

Jeder Messerhalter 52 weist eine in y-Achsenrichtung verlaufende als Durchgangsöffnung ausgebildete Lagerungsöffnung 53 auf, durch welche hindurch sich die gemeinsame Welle 51 der Schneidmesser-Überlastsicherungen 50 erstreckt, so dass der Messerhalter 52 um die Welle 51 als eine Schwenkachse A2 schwenkbar ist. Jeder Messerhalter 52 weist außerdem einen Messeraufnahmeabschnitt 54 und einen angeformten Hebel 55 auf.

Der Messeraufnahmeabschnitt 54 jedes Messerhalters 52 ist sich zu einem Einsetzende 54a dessen hin keilförmig erweiternd ausgebildet, und jedes Schneidmesser 40 ist komplementär dazu sich über eine einer Länge des Messeraufnahmeabschnitts 54 entsprechende Länge zu seinem zweiten Längsende 41 b hin keilförmig verjüngend ausgebildet, so dass das Schneidmesser 40 zur Halterung dessen vom Einsetzende 54a des Messerhalters 52 aus formschlüssig in den Messeraufnahmeabschnitt 54 einsetzbar ist (Das Schneidmesser 40 weist zum Passieren der Welle 51 einen entsprechenden Schlitz auf, welcher nicht separat bezeichnet ist). Ein Keilwinkel W1 des Messeraufnahmeabschnitts 54 (und dementsprechend des zugehörigen Einsetzabschnitts des Schneidmessers 40) beträgt dabei weniger als 10 Grad und bevorzugt etwa 6 Grad. Um die Schneidmesser 40 sicher in den Messerhaltern 52 zu fixieren, ist eine Welle vorgesehen, deren Mantelfläche an mindestens einer Seite abgeflacht ist, und in einer vorgegebenen Drehposition alle Schneidmesser 40 sichert sowie durch Verdrehen in eine Freigabeposition entsichert, wodurch die Entnahme der Schneidmesser ermöglicht wird.

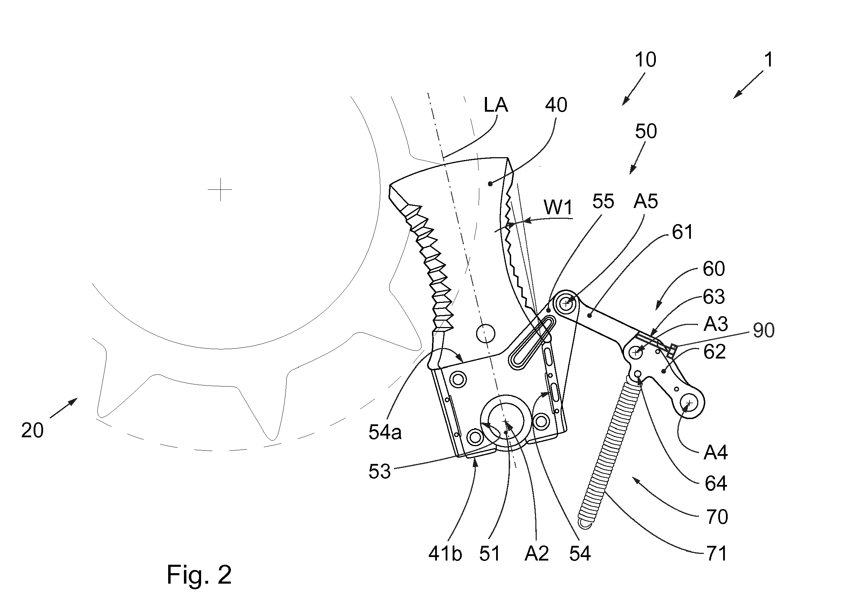

Jeder Kniehebelmechanismus 60 weist zwei Kniehebel 61, 62 auf, die über ein Knickgelenk 63 an jeweiligen Längsenden dieser um eine sich parallel zur Drehachse A1 der Fördertrommel 20 erstreckende erste Kniehebelachse A3 schwenkbar miteinander verbunden sind, wobei das Knickgelenk 63 in einer insbesondere in den Figuren 1 und 2 gezeigten Gestrecktstellung der Kniehebel 61, 62, in der die Kniehebel 61, 62 am Knickgelenk 63 einen Winkel von nur wenig unter 180 Grad (z.B. bevorzugt etwa 172 Grad) miteinander einschließen bzw. fast in gerader Linie verlaufen, auf Anschlag stellbar ist.

Es ist auch möglich zusätzliche Mittel vorzusehen, mit welchen der Anschlagpunkt eingestellt werden kann, wodurch der Winkel den die Kniehebel einschließen wenn sie auf Anschlag stehen, verändert werden kann. Dadurch kann der Ausrückpunkt besonders feinfühlig eingestellt und/oder etwaiger Verschleiß ausgeglichen werden. Vorzugsweise kann hierzu eine Schraube 90 (Fig. 2) an einem der Kniehebel vorgesehen werden, an deren Ende der andere Hebel anschlägt. Durch die Einschraubtiefe kann der Anschlagpunkt verlagert und damit der Winkel, den die Kniehebel 61, 62 in Gestrecktstellung einschließen, verändert werden.

Ein dem Knickgelenk 63 abgewandtes Längsende des einen Kniehebels 62 ist um eine zur ersten Kniehebelachse A3 parallele zweite Kniehebelachse A4 schwenkbar am Gehäuse 30 des Schneidwerks 10 festgelegt, wohingegen ein dem Knickgelenk 63 abgewandtes Längsende des anderen Kniehebels 61 um eine zur ersten Kniehebelachse A3 parallele dritte Kniehebelachse A5 schwenkbar mit dem an den zugehörigen Messerhalter 52 angeformten Hebel 55 verbunden ist, so dass eine Schwenkbewegung des Messerhalters 52 auf den Kniehebelmechanismus 60 übertragbar ist.

Der Hebel 55 ist dabei derart an den Messerhalter 52 angeformt, dass der Hebel 55 bei am Messerhalter 52 gehaltertem Schneidmesser 40 sich in einem spitzen Winkel zu einer Mittellängsachse des Schneidmessers 40 erstreckend seitlich über das Schneidmesser 40 hinaus vorsteht, wobei das dem Knickgelenk 63 abgewandte Längsende des anderen Kniehebels 61 mit einem distalen Ende des Hebels 55 des Messerhalters 52 um die dritte Kniehebelachse A5 schwenkbar verbunden ist.

Jede Schneidmesser-Überlastsicherung 50 weist außerdem Federmittel 70 auf, welche den Kniehebelmechanismus 60 mittels Federwirkung zur Realisierung einer gewünschten vorbestimmten Vorspannkraft in Richtung zur Schneidposition des Schneidmessers 40 zum Anschlag hin in die Gestrecktstellung vorspannen. Genauer weisen die Federmittel 70 jeder Schneidmesser-Überlastsicherung 50 eine Zugfeder 71 aus Metall auf, deren eines Ende an einem Anlenkpunkt 64 mit dem jeweiligen Kniehebelmechanismus 60 verbunden ist, so dass die Zugfeder 71 ihre Federkraft bzw. Federwirkung an dem Knickgelenk 63 in den jeweiligen Kniehebelmechanismus 60 einleitend diesen zum Anschlag des Knickgelenks 63 hin in die Gestrecktstellung vorspannt. Die anderen Enden der jeweiligen Zugfedern 71 der Kniehebelmechanismen 60 der Schneidmesser-Überlastsicherungen 50 sind an einem gemeinsamen sich in y-Achsenrichtung erstreckenden trägerähnlichen Verbindungselement 80 befestigt.

Um eine Größe der Vorspannkraft bzw. der Federkraft der Zugfedern selektiv verändern bzw. einstellen zu können, ist das Verbindungselement 80 so am Gehäuse 30 gelagert, dass ein Abstand des Verbindungselements 80 von den jeweiligen Anlenkpunkten 64 selektiv und für alle Zugfedern 71 gleichzeitig und einheitlich einstellbar ist. Obwohl in den Figuren 1 bis 3 nicht detailliert gezeigt und nicht separat bezeichnet, sind zur Abstandsverstellung des Verbindungselements 80 zwei in Längsrichtung (in y-Achsenrichtung in Fig. 1) der Fördertrommel 20 beabstandete Schwenkhebel vorgesehen, welche jeweils über eine sich in Längsrichtung der Fördertrommel 20 bzw. parallel zu deren Drehachse A1 erstreckende Schwenkachse schwenkbar am Gehäuse 30 gelagert sind und welche mit dem Verbindungselement 80 drehbar verbunden sind, so dass das Verbindungselement 80 über die Schwenkhebel eine Schwenkbewegung um deren Schwenkachse zu den Anlenkpunkten 64 hin und von diesen weg ausführen kann. Zum Antreiben der Schwenkbewegung des Verbindungselements 80 sind nicht detailliert gezeigte und nicht separat bezeichnete Antriebsmittel z.B. in Form zweier miteinander bewegungssynchronisierter hydraulischer Kolben-Zylinder-Einheiten vorgesehen. Im Ergebnis sind dadurch Krafteinstellmittel bereitgestellt, mit denen eine Größe der Vorspannkraft bzw. Federkraft, mit welcher das Schneidmesser 40 zur Schneidposition hin und der Kniehebelmechanismus 60 in die Gestrecktstellung vorgespannt sind, selektiv einstellbar ist.

Bei der wie oben beschriebenen Konfiguration der Schneidmesser-Überlastsicherung 50 stellt der mit dem jeweils zugeordneten Schneidmesser 40 zusammenwirkende Kniehebelmechanismus 60 in seiner Gestrecktstellung eine Stützstellung bereit, in welcher der Kniehebelmechanismus 60 das Schneidmesser 40 in seiner Schneidposition abstützt.

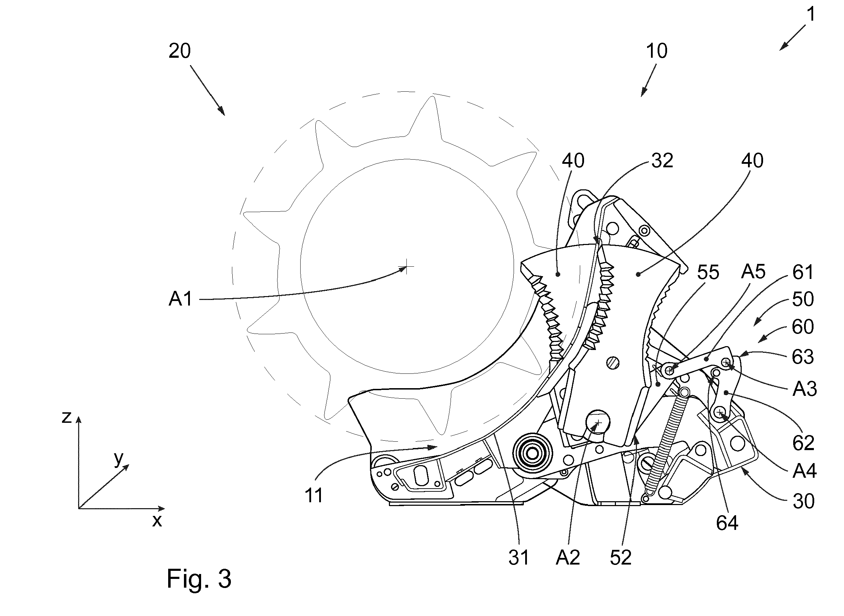

Bei einer auf das Schneidmesser 40 im Förderkanal 11 einwirkenden die Vorspannkraft überschreitenden Überlast, welche z.B. durch Fremdkörper wie Steine hervorgerufen werden kann, ist das Schneidmesser 40 gegen die mit den Federmitteln 70 realisierte Vorspannkraft aus seiner Schneidstellung heraus um die Schwenkachse A2 in eine in Fig. 3 für das vorderste Schneidmesser 40 gezeigte Ausweichposition verschwenkbar, wobei das Schneidmesser 40 durch die zugehörige Öffnung 32 im Leitelement 31 hindurch in Schwenkrichtung weg von der Fördertrommel 20 geschwenkt wird.

Beim Ausweichen des Schneidmessers 40 aus der Schneidposition in die Ausweichposition werden die Kniehebel 61, 62 des mit dem Messerhalter 52 des Schneidmessers 40 gekoppelten Kniehebelmechanismus 60 durch gegen die Federwirkung bzw. Federkraft der Federmittel 70 vom Anschlag weg im Knickgelenk 63 Einknicken des Kniehebelmechanismus 60 aus der Gestrecktstellung bzw. Stützstellung herausgestellt, so dass das gegen die Vorspannkraft aus der Schneidposition in die Ausweichposition Ausweichen des Schneidmessers 40 zugelassen wird, wie für das vorderste Schneidmesser 40 mit zugehörigem Kniehebelmechanismus 60 (die Federmittel 70 sind für diese vorderste Schneidmesser-Überlastsicherung 50 nicht dargestellt) in Fig. 3 gezeigt.

Nach Beseitigung der Überlast für das Schneidmesser 40 wird durch die in das Knickgelenk 63 eingeleitete Federwirkung bzw. Federkraft der Federmittel 70 der betreffende Kniehebelmechanismus 60 bzw. dessen Kniehebel 61, 62 wieder in Richtung zum Anschlag hin gezogen, wodurch das Schneidmesser 40 in Schwenkrichtung zur Fördertrommel 20 hin verschwenkt und damit zurück in seine Schneidstellung verbracht wird. Mit Wiederherstellung der Schneidstellung wird auch die Gestrecktstellung bzw. Stützstellung des Kniehebelmechanismus 60 wieder hergestellt.

Schließlich bleibt noch zu erwähnen, dass an einer erfindungsgemäßen Schneidmesseranordnung auch eine allgemein bekannte Gruppenschaltung vorgesehen werden kann. Durch diese können vordefinierte Gruppen von Messern außer Eingriff gebracht werden, um die Schnittlänge am Erntegut zu verlängern.

Im Fazit steht gemäß der beschriebenen Ausführungsform der Erfindung bei der Schneidmesser-Überlastsicherung 50 das Schneidmesser 40 formschlüssig in dem Messerhalter 52 (Haltevorrichtung), der mit dem Kniehebelmechanismus 60 zur Überlastsicherung verbunden ist. Durch die leichte Keilform von hier z.B. etwa 6 Grad Keilwinkel W1 sind eine gute Passung zwischen Schneidmesser 40 und Messerhalter 52 sowie ein leichtes Entnehmen nach oben (in den Figuren) gewährleistet.

Die Schneidmesser-Überlastsicherung 50 umfasst den Kniehebelmechanismus 60, der durch die Federkraft in seine annähernd gestreckte Lage bzw. Gestrecktstellung (z.B. etwa 172 Grad) gezogen wird. Durch diese Anordnung kann eine relativ große Vorspannkraft in Schwenkrichtung zur Schneidposition des Schneidmessers 40 hin bereitgestellt werden, bei deren Überschreitung das Schneidmesser 40 schlagartig aus der Schneidposition in die Ausweichposition ausweicht. Die im Überlastfall bzw. in der Ausweichposition in Bezug auf die jeweilige Einstellung des Abstandes von Verbindungselement 80 und Anlenkpunkt 64 voll gespannte Zugfeder 71 zieht dabei das Schneidmessers 40 nach Beendigung der Überlast (z.B. nach Durchlauf eines Fremdkörpers) wieder in seine Schneidposition. Durch unterschiedliche Vorspannung der Zugfeder 71 mittels Veränderns des Abstandes des Verbindungselements 80 vom Anlenkpunkt 64 kann zudem ein Ausrückpunkt bzw. eine Ausrückschwelle für das Schneidmesser 40 eingestellt werden. Eine gemeinsame Verriegelung aller Schneidmesser 40 kann durch Verdrehen der als Schlüsselwelle fungierenden Welle 51, welche gleichzeitig die Schwenkachse A2 für die Schneidmesser 40 definiert, erfolgen.

Schlussendlich begünstigt die erfindungsgemäße Ausgestaltung der Schneidmesser-Überlastsicherung 50 die wie hier beschriebene Konfiguration eines symmetrischen Wendeschneidmessers mit zwei Schneiden, indem die Anbindung der Überlastsicherung wie gemäß der Erfindung realisiert vom Schneidmesser 40 weg auf weitere Komponenten, wie den Messerhalter 52 und den Kniehebelmechanismus 60 mit den Federmitteln 70, übertragen ist.

### Bezugszeichenliste

- 1: Erntemaschine
- 10: Schneidwerk
- 11: Förderkanal
- 11a: Eingang
- 11b: Ausgang
- 20: Fördertrommel
- 21: Außenumfang
- 23: Mitnehmerscheibe
- 24: Mitnehmerzinke (Förderelement)
- 26: Hüllzylinder
- 30: Gehäuse
- 31: Leitelement
- 32: Öffnung
- 40: Schneidmesser
- 41a, 41b: Längsenden
- 43a, 43b: Schneiden
- 50: Schneidmesser-Überlastsicherung
- 51: Welle
- 52: Messerhalter
- 53: Lagerungsöffnung
- 54: Messeraufnahmeabschnitt
- 54a: Einsetzende
- 55: Hebel
- 60: Kniehebelmechanismus
- 61, 62: Kniehebel
- 63: Knickgelenk
- 64: Anlenkpunkt
- 70: Federmittel
- 71: Zugfeder(n)
- 80: Verbindungselement
- 90: Schraube
- A1: Drehachse
- A2: Schwenkachse
- A3: Kniehebelachse
- A4: Kniehebelachse
- A5: Kniehebelachse
- LA: Mittellängsachse
- W1: Keilwinkel
- x, y,: z Achsenrichtungen

## Patentansprüche

1. Schneidmesser-Überlastsicherung (50) für ein Schneidwerk (10) einer Erntemaschine (1), aufweisend:
eine Hebelanordnung zum Zusammenwirken mit einem Schneidmesser (40) des Schneidwerks (10), wobei die Hebelanordnung in eine Stützstellung, um das Schneidmesser (40) in einer Schneidposition dessen abzustützen, und gegen eine vorbestimmte Vorspannkraft aus der Stützstellung heraus stellbar ist, um das Schneidmesser (40) bei einer auf dieses einwirkenden die Vorspannkraft überschreitenden Überlast aus der Schneidposition ausweichen zu lassen,
**dadurch gekennzeichnet, dass** die Hebelanordnung als Kniehebelmechanismus (60) mit zwei Kniehebeln (61, 62) ausgebildet ist, die über ein Knickgelenk (63) an jeweiligen Längsenden dieser schwenkbar miteinander verbunden sind, wobei das Knickgelenk (63) in einer Gestrecktstellung der Kniehebel (61, 62) unter die Vorspannkraft realisierender Vorspannung auf Anschlag stellbar ist, so dass die Stützstellung hergestellt ist, und die Kniehebel (61, 62) durch gegen die Vorspannung vom Anschlag weg im Knickgelenk (63) Einknicken des Kniehebelmechanismus (60) aus der Gestrecktstellung herausstellbar sind, um das aus der Schneidposition Ausweichen des Schneidmessers (40) zuzulassen.

2. Schneidmesser-Überlastsicherung (50) gemäß Anspruch 1, ferner mit einem Messerhalter (52), der eingerichtet ist, das Schneidmesser (40) an einem Längsende (41 b) dessen zu halten, und der eingerichtet ist, um eine Schwenkachse (A2) schwenkbar im Schneidwerk (10) gelagert zu werden, so dass das Schneidmesser (40) um die Schwenkachse (A2) in seine Schneidposition und zum aus der Schneidposition Ausweichen aus dieser heraus schwenkbar ist.

3. Schneidmesser-Überlastsicherung (50) gemäß Anspruch 2, wobei das Knickgelenk (63) eine erste Kniehebelachse (A3) des Kniehebelmechanismus (60) bildet, und wobei ein dem Knickgelenk (63) abgewandtes Längsende des einen Kniehebels (62) eingerichtet ist, um eine zur ersten Kniehebelachse (A3) parallele zweite Kniehebelachse (A4) schwenkbar im Schneidwerk (10) gelagert zu werden, und ein dem Knickgelenk (63) abgewandtes Längsende des anderen Kniehebels (61) um eine zur ersten Kniehebelachse (A3) parallele dritte Kniehebelachse (A5) schwenkbar mit dem Messerhalter (52) verbunden ist, so dass eine Schwenkbewegung des Messerhalters (52) auf den Kniehebelmechanismus (60) übertragbar ist.

4. Schneidmesser-Überlastsicherung (50) gemäß Anspruch 3, wobei an den Messerhalter (52) ein Hebel (55) derart angeformt ist, dass der Hebel (55) bei am Messerhalter (52) gehaltertem Schneidmesser (40) sich in einem spitzen Winkel zu einer Längsachse (LA) des Schneidmessers (40) erstreckend seitlich über das Schneidmesser (40) hinaus vorsteht, und wobei das dem Knickgelenk (63) abgewandte Längsende des anderen Kniehebels (61) mit einem distalen Ende des Hebels (55) des Messerhalters (52) um die dritte Kniehebelachse (A5) schwenkbar verbunden ist.

5. Schneidmesser-Überlastsicherung (50) gemäß einem der Ansprüche 2 bis 4, wobei ein Messeraufnahmeabschnitt (54) des Messerhalters (52) sich zu einem Einsetzende (54a) dessen hin keilförmig erweiternd ausgebildet ist, so dass das Schneidmesser (40) zur Halterung dessen vom Einsetzende (54a) aus formschlüssig in den Messeraufnahmeabschnitt (54) einsetzbar ist.

6. Schneidmesser-Überlastsicherung (50) gemäß Anspruch 5, wobei sich der Messeraufnahmeabschnitt (54) mit einem Keilwinkel (W1) von kleiner als 10 Grad keilförmig erweitert.

7. Schneidmesser-Überlastsicherung (50) gemäß einem der Ansprüche 2 bis 6, ferner mit einer Welle (51), die eingerichtet ist, drehbar im Schneidwerk (10) gelagert zu werden, und die sich durch eine Lagerungsöffnung (53) im Messerhalter (52) hindurch erstreckt, so dass der Messerhalter (52) um die Welle (51) als seine Schwenkachse (A2) schwenkbar ist, und wobei die Welle (51) und der Messerhalter (52) Arretierungsmittel aufweisen, so dass durch um einen vorbestimmten Drehwinkel Verdrehen der Welle (51) relativ zum Messerhalter (52) der Messerhalter (52) zumindest in einer Schwenkrichtung gegenüber der Welle (51) arretierbar ist.

8. Schneidmesser-Überlastsicherung (50) gemäß einem der Ansprüche 1 bis 7, ferner mit Federmitteln (70), welche den Kniehebelmechanismus (60) mittels Federwirkung zum Anschlag hin in die Stützstellung vorspannen.

9. Schneidmesser-Überlastsicherung (50) gemäß Anspruch 8, wobei die Federmittel (70) so vorgesehen sind, dass sie ihre Federwirkung an dem Knickgelenk (63) in den Kniehebelmechanismus (60) einleiten.

10. Schneidmesser-Überlastsicherung (50) gemäß einem der Ansprüche 1 bis 9, ferner mit Krafteinstellmitteln (80), die so eingerichtet sind, dass eine Größe der Vorspannkraft, mit welcher das Schneidmesser (40) in die Schneidposition vorgespannt ist, selektiv einstellbar ist.

## Claims

1. A cutting blade overload safety device (50) for a cutting mechanism (10) of a combine harvester (1), comprising:
a lever arrangement for cooperating with a cutting blade (40) of the cutting mechanism (10), wherein the lever arrangement is displaceable into a support position for supporting the cutting blade (40) in a cutting position thereof and out of the support position against a predetermined biasing force to allow the cutting blade (40) to deflect from the cutting position upon an overload which acts thereon and which exceeds the biasing force,
**characterised in that** the lever arrangement is in the form of a toggle lever mechanism (60) having two toggle levers (61, 62) which are pivotably connected together by way of a toggle joint (63) at respective longitudinal ends thereof, wherein the toggle joint (63) can be put into an abutment condition in a straight position of the toggle levers (61, 62) under the biasing force implementing biasing so that the support position is brought about, and the toggle levers (61, 62) can be moved out of the straight position by folding of the toggle lever mechanism (60) against the biasing away from the abutment condition in the toggle joint (63) to allow the deflection out of the cutting position of the cutting blade (40).

2. A cutting blade overload safety device (50) according to claim 1 and further comprising a blade holder (52) adapted to hold the cutting blade (40) at a longitudinal end (41b) thereof and adapted to be mounted in the cutting mechanism (10) pivotably about a pivot axis (A2) so that the cutting blade (40) is pivotable about the pivot axis (A2) into its cutting position and out of same for deflection out of the cutting position.

3. A cutting blade overload safety device (50) according to claim 2 wherein the toggle joint (63) forms a first toggle lever axis (A3) of the toggle lever mechanism (60) and wherein a longitudinal end of the one toggle lever (62), that faces away from the toggle joint (63), is adapted to be mounted in the cutting mechanism (10) pivotably about a second toggle lever axis (A4) parallel to the first toggle lever axis (A3) and a longitudinal end of the other toggle lever (61), that faces away from the toggle joint (63), is connected to the blade holder (52) pivotably about a third toggle lever axis (A5) parallel to the first toggle lever axis (A3) so that a pivotal movement of the blade holder (52) can be transmitted to the toggle lever mechanism (60).

4. A cutting blade overload safety device (50) according to claim 3 wherein a lever (55) is formed on the blade holder (52) in such a way that with a cutting blade (40) held to the blade holder (52) the lever (55) projects laterally beyond the cutting blade (40) extending at an acute angle relative to the longitudinal axis (LA) of the cutting blade (40), and wherein the longitudinal end of the other toggle lever (61), that faces away from the toggle joint (63), is connected pivotably about the third toggle lever axis (A5) to a distal end of the lever (55) of the blade holder (52).

5. A cutting blade overload safety device (50) according to one of claims 2 to 4 wherein a blade receiving portion (54) of the blade holder (52) is of a configuration enlarging in a wedge shape towards an insertion end (54a) thereof so that the cutting blade (40) can be inserted into the blade receiving portion (54) in positively locking relationship from the insertion end (54a) for holding same.

6. A cutting blade overload safety device (50) according to claim 5 wherein the blade receiving portion (54) enlarges in a wedge shape with a wedge angle (W1) of less than 10 degrees.

7. A cutting blade overload safety device (50) according to one of claims 2 to 6 and further comprising a shaft (51) which is adapted to be mounted rotatably in the cutting mechanism (10) and which extends through a mounting opening (53) in the blade holder (52) so that the blade holder (52) is pivotable about the shaft (51) as its pivot axis (A2) and wherein the shaft (51) and the blade holder (52) have arresting means so that by rotation through a predetermined rotary angle of the shaft (51) relative to the blade holder (52) the blade holder (52) can be arrested at least in a pivotal direction with respect to the shaft (51).

8. A cutting blade overload safety device (50) according to one of claims 1 to 7 and further comprising spring means (70) which bias the toggle lever mechanism (60) by means of a spring action towards the abutment condition into the support position.

9. A cutting blade overload safety device (50) according to claim 8 wherein the spring means (70) are so provided that they apply their spring action at the toggle joint (63) to the toggle lever mechanism (60).

10. A cutting blade overload safety device (50) according to one of claims 1 to 9 and further comprising force adjusting means (80) which are so adapted that a magnitude of the biasing force with which the cutting blade (40) is biased into the cutting position is selectively adjustable.

## Revendications

1. Sécurité de surcharge de couteau (50) pour un tablier de coupe (10) d'une machine de récolte (1), présentant un système de leviers destiné à coopérer avec un couteau (40) du tablier de coupe (10), le système de leviers pouvant être mis dans une position d'appui permettant de maintenir le couteau (40) dans sa position de coupe, et être sorti de la position d'appui à l'encontre d'une force de précontrainte prédéterminée pour permettre au couteau (40) de s'écarter de la position de coupe lorsqu'une surcharge excédant la force de précontrainte agit sur lui, **caractérisée en ce que** le système de leviers est réalisé sous la forme d'un mécanisme à leviers à genouillère (60) présentant deux leviers à genouillère (61, 62) qui sont reliés ensemble de manière pivotante par une articulation (63) à une de leurs extrémités longitudinales respectives, l'articulation (63) pouvant être mise en butée dans une position étirée des leviers à genouillère (61, 62) sous la précontrainte réalisant la force de précontrainte, de façon que la position d'appui soit réalisée, et les leviers à genouillère (61, 62) pouvant être sortis de la position étirée par inflexion, à l'encontre de la précontrainte, du mécanisme à leviers à genouillère (60) dans la direction éloignant l'articulation (63) de la butée, pour permettre au couteau (40) de s'écarter de la position de coupe.

2. Sécurité de surcharge de couteau (50) selon la revendication 1, présentant en outre un porte-couteau (52) qui est conçu pour maintenir le couteau (40) à une extrémité longitudinale (41b) et qui est conçu pour être monté pivotant autour d'un axe de pivotement (A2) dans le tablier de coupe (10), de façon que le couteau (40) puisse pivoter autour de l'axe de pivotement (A2) pour être mis dans sa position de coupe et pour être écarté de ladite position de coupe.

3. Sécurité de surcharge de couteau (50) selon la revendication 2, dans laquelle l'articulation (63) forme un premier axe de levier à genouillère (A3) du mécanisme à leviers à genouillère (60), et dans laquelle une extrémité longitudinale d'un levier à genouillère (62) éloignée de l'articulation (63) est conçue pour être montée pivotante dans le tablier de coupe (10) autour d'un deuxième axe de levier à genouillère (A4) parallèle au premier axe de levier à genouillère (A3), et une extrémité longitudinale de l'autre levier à genouillère (61) éloignée de l'articulation (63) est reliée au porte-couteau (52) de manière pivotante autour d'un troisième axe de levier à genouillère (A5) parallèle au premier axe de levier à genouillère (A3), de façon qu'un mouvement pivotant du porte-couteau (52) puisse être transmis au mécanisme à leviers à genouillère (60).

4. Sécurité de surcharge de couteau (50) selon la revendication 3, dans laquelle un levier (55) est formé sur le porte-couteau (52) de façon que, le couteau (40) étant fixé au porte-couteau (52), le levier (55) s'étende latéralement au-delà du couteau (40) en formant un angle aigu par rapport à un axe longitudinal (LA) du couteau (40), et dans laquelle l'extrémité longitudinale de l'autre levier à genouillère (61) éloignée de l'articulation (63) est reliée de manière pivotante autour du troisième axe de levier à genouillère (A5) à une extrémité distale du levier (55) du porte-couteau (52).

5. Sécurité de surcharge de couteau (50) selon l'une des revendications 2 à 4, dans laquelle une partie réceptrice de couteau (54) du porte-couteau (52) est réalisée de façon à s'élargir en forme de coin vers une extrémité d'insertion (54a) de celle-ci, de façon que le couteau (40) puisse être inséré par complémentarité de forme dans la partie réceptrice de couteau (54) depuis l'extrémité d'insertion (54a) pour y être maintenu.

6. Sécurité de surcharge de couteau (50) selon la revendication 5, dans laquelle la partie réceptrice de couteau (54) s'élargit en forme de coin avec un angle de coin (W1) inférieur à 10 degrés.

7. Sécurité de surcharge de couteau (50) selon l'une des revendications 2 à 6, présentant en outre un arbre (51) qui est conçu pour être monté tournant dans le tablier de coupe (10) et qui s'étend dans le porte-couteau (52) à travers une ouverture de montage (53), de façon que le porte-couteau (52) puisse pivoter autour de l'arbre (51) en tant que son axe de pivotement (A2), et dans laquelle l'arbre (51) et le porte-couteau (52) présentent des moyens d'arrêt, de façon que le porte-couteau (52) puisse être arrêté au moins dans un sens de pivotement par rapport à l'arbre (51) par une rotation d'un angle prédéterminé de l'arbre (51) par rapport au porte-couteau (52).

8. Sécurité de surcharge de couteau (50) selon l'une des revendications 1 à 7, présentant en outre des moyens formant ressort (70) qui précontraignent par effet de ressort le mécanisme à leviers à genouillère (60) dans la position d'appui en direction de la butée.

9. Sécurité de surcharge de couteau (50) selon la revendication 8, dans laquelle les moyens formant ressort (70) sont prévus de façon que leur effet de ressort agisse sur l'articulation (63) dans le mécanisme à leviers à genouillère (60).

10. Sécurité de surcharge de couteau (50) selon l'une des revendications 1 à 9, présentant en outre des moyens de réglage de force (80) qui sont conçus de façon à permettre le réglage sélectif d'une grandeur de la force de précontrainte avec laquelle le couteau (40) est précontraint dans la position de coupe.
